Europäisches Patentamt

European Patent Office

Office européen des brevets

(19)

(11) Veröffentlichungsnummer: **0 213 435
B1**

(12) **EUROPÄISCHE PATENTSCHRIFT**

(45) Veröffentlichungstag der Patentschrift:
**14.06.89**

(21) Anmeldenummer: **86110812.4**

(22) Anmeldetag: **05.08.86**

(51) Int. Cl.⁴: **F01N 3/28, B01J 35/04**

(54) Verfahren zum selektiven Beloten eines metallischen Katalysatorträgerkörpers und entsprechend hergestellter Katalysatorträgerkörper.

(30) Priorität. **19.08.85 DE 3529654**

(43) Veröffentlichungstag der Anmeldung:
**11.03.87 Patentblatt 87/11**

(45) Bekanntmachung des Hinweises auf die Patenterteilung:
**14.06.89 Patentblatt 89/24**

(84) Benannte Vertragsstaaten:
**AT BE CH DE FR GB IT LI LU NL SE**

(56) Entgegenhaltungen:
**DE-C- 2 727 967
GB-A- 2 069 364**

(73) Patentinhaber. **INTERATOM Gesellschaft mit beschränkter Haftung, Friedrich-Ebert-Strasse, D-5060 Bergisch-Gladbach 1(DE)**

(72) Erfinder: **Cyron, Theodor, Dipl.-Ing., Kurt-Schumacher-Strasse 12, D-5060 Bergisch Gladbach(DE)**

(74) Vertreter: **Mehl, Ernst, Dipl.-Ing. et al, Postfach 22 13 17, D-8000 München 22(DE)**

**Beschreibung**

Die vorliegende Erfindung betrifft ein Verfahren nach dem Oberbegriff des Anspruchs 1 sowie entsprechend hergestellte Katalysatorträgerkörper.

Aus der EP-A 0 121 174 ist bereits ein Katalysatorträgerkörper aus · abwechselnden Lagen glatter und gewellter Bleche bekannt, und in dieser Schrift wird auch auf die Probleme durch thermische Wechselbelastungen hingewiesen. Bei dem spiralig gewickelten Katalysatorträgerkörper nach dieser Schrift wird davon ausgegangen, daß alle Berührungspunkte zwischen den glatten und gewellten Blechen verlötet sind, so daß auf andere Weise, nämlich durch Dehnungsschlitze Möglichkeiten geschaffen werden müssen, die Dehnungen auszunehmen.

Aus der DE-A 3 312 944 ist auch ein spannungsentlastetes Metallträgergehäuse bekannt, welches nur an nach einem bestimmten System ausgewählten Stellen zwischen den glatten und den gewellten Blechen Verbindungen aufweist. Bei diesem Verfahren ist nur eine selektive Belotung vor dem Aufwickeln möglich, was jedoch verfahrenstechnisch relativ aufwendig ist.

Aus der GB-A 2 069 364 ist auch schon die Stabilisierung eines metallischen Katalysatorträgerkörpers durch über die Stirnseiten verlaufende Schweißlinien bekannt. Abgesehen von den Problemen bei Schweißverbindungen an hochtemperaturkorrosionsfesten Stahlblechen können solche relativ steifen Schweißlinien den Körper nicht widerstandsfähig gegen thermische Wechselbelastungen und die damit verbundenen Dehnungen machen.

Aufgabe der vorliegenden Erfindung sind ein möglichst rationelles Verfahren zum Herstellen von gegen thermische Wechselbelastungen widerstandsfähigen Katalysatorträgerkörpern unter Minimierung der notwendigen Verfahrensschritte und des Materialeinsatzes sowie entsprechend hergestellte Katalysatorträgerkörper.

Zur Lösung dieser Aufgabe wird ein Katalysatorträgerkörper nach Anspruch 1 vorgeschlagen. Das Beloten von bereits gewickelten Trägerkörpern von den Stirnseiten her ist im Prinzip bekannt, jedoch wurde eine selektive Belotung nur bestimmter Bereiche der Stirnseiten bisher nicht verwirklicht. Es hat sich jedoch gezeigt, daß eine vollständig verlötete Stirnseite relativ steif ist und bei thermischen Wechselbelastungen zu einer Zerstörung des Katalysatorträgerkörpers führt. Gemäß der Erfindung wird dementsprechend vorgeschlagen, direkt beim Beloten nur bestimmte Bereiche einer oder beider Stirnseiten einzubeziehen, wodurch eine sehr viel flexiblere Trägermatrix entsteht. Die bei vollständig verlöteten Stirnseiten eventuell nötigen Dehnungsschlitze werden so durch nicht verlötete Bereiche ersetzt. In diesen Bereichen können die gewellten Bleche die thermischen Dehnungen durch Verformung aufnehmen. Dabei ist zu beachten, daß jeder zu belotende Bereich sowohl in Umfangsrichtung als auch in radialer Richtung nur einen Teil der Stirnfläche betrifft. Es sollen weder ein ganzer Radius noch ein ganzer Umfang einer Lage verlötet werden.

Vorteilhafte Ausgestaltungen werden in den Unteransprüchen beschrieben und anhand der Zeichnung veranschaulicht. So ist es für die Stabilität des erfindungsgemäßen Katalysatorträgerkörpers wichtig, daß genügend belotete Bereiche vorhanden sind, wobei es jedoch unbedeutend ist, ob diese ein regelmäßiges oder ein unregelmäßiges Muster bilden, sofern sie nur entsprechend dem Erfindungsgedanken genügend Bereiche für Dehnungen freilassen.

Für das Vorgehen beim Aufbringen des Lotes gibt es verschiedene Möglichkeiten, wie z.B. das Aufbringen eines Klebers, Binders oder vorzugsweise Haftklebers auf die zu belotenden Bereiche und das anschließende Beloten mit Lot. Dabei kann besonders günstig ein entsprechend den zu belotenden Bereichen vorgeformter elastischer Stempel oder dergleichen verwendet werden. Es ist auch möglich Kleber, Binder bzw. Haftkleber und/oder das Lot durch eine geeignet vorgeformte Maske hindurch aufzubringen. Durch die Wahl der Belotungsmethode kann auch bestimmt werden, in welchem Maße Lot von den Stirnseiten bis in das Innere des Katalysatorträgerkörpers gelangt, je nach den Anforderungen an die fügetechnische Verbindung.

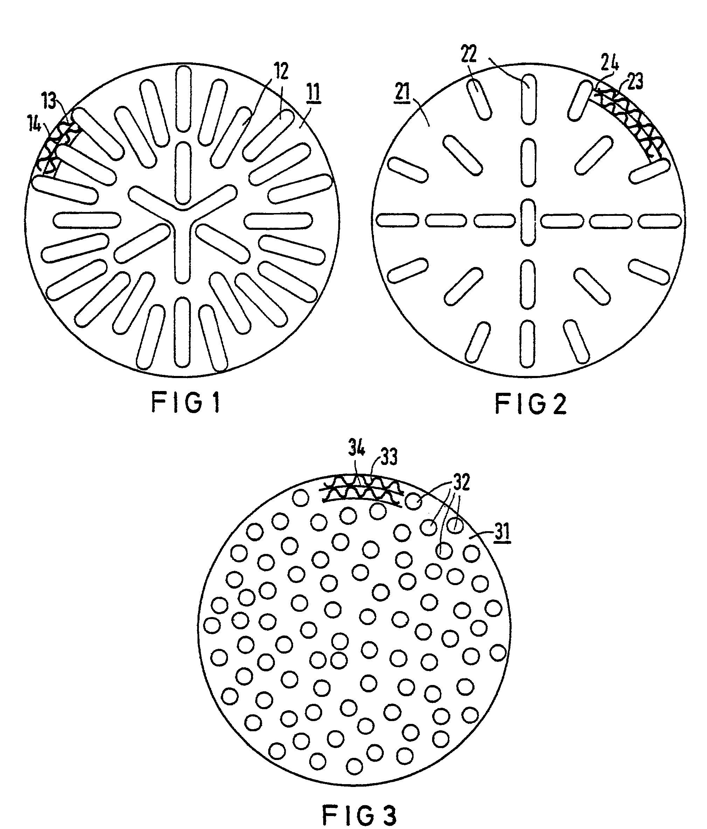

Ausführungsbeispiele der Erfindung sind schematisch in der Zeichnung dargestellt und zwar zeigen Figuren 1, 2, 3, 4 und 5 Ansichten der Stirnflächen erfindungsgemäßer Katalysatorträgerkörper unter Hervorhebung der verlöteten Bereiche.

Figur 1 zeigt eine gegenüber Drehungen um den Mittelpunkt um jeweils 120° invariante Anordnung der verlöteten Bereiche 12, wobei der Aufbau aus glatten 14 und gewellten 13 Blechen nur schematisch angedeutet ist. Jeder Bereich 12 überdeckt jedoch einige Lagen bzw. Wellen der gewickelten Blechbänder 13, 14. Die genaue Größe der zu verlötenden Bereiche 12 ist in weiten Grenzen variabel, jedoch sollten bevorzugt die Bereiche 12 in radialer und/oder Umfangsrichtung gegeneinander versetzt sein, um eine optimale Verteilung der verlöteten Bereiche 12 und der dazwischenliegenden Bereiche zu erreichen. Die selektive Verlötung der Stirnflächen führt außerdem zu einer Einsparung an Lot, da erhebliche Flächenanteile nicht belotet werden müssen. Die Belotung kann, wie auch die vollständige Belotung einer Stirnseite, in einem Arbeitsgang durchgeführt werden.

Figur 2 zeigt die Stirnseite eines Katalysatorträgerkörpers 21 mit einer anderen Anordnung von verlöteten Bereichen 22. Diese Anordnung ist gegenüber Drehungen von 90° um den Mittelpunkt invariant. Eine Vielzahl anderer Symmetrien ist denkbar. Die Schichtung des Katalysatorträgerkörpers 21 aus gewellten 23 und glatten 24 Blechen ist wiederum nur angedeutet.

Eine unregelmäßige Verteilung der zu verlötenden Bereiche 32 auf der Stirnseite eines Katalysatorträgerkörpers 31 ist in Figur 3 dargestellt. Die spiralig aufgewickelten Bleche, 33, 34 werden durch zum Beispiel etwa kreisförmige Bereiche, welche mehr oder weniger zufällig auf der Stirnseite verteilt sind, verlötet. Die Größe der Lötbereiche 32 sollte jeweils wieder größer als die Dicke einer Lage und die Breite einer Welle sein, um jedenfalls immer mindestens eine Berührungsstelle der glatten und gewellten Bleche 33, 34 zu treffen.

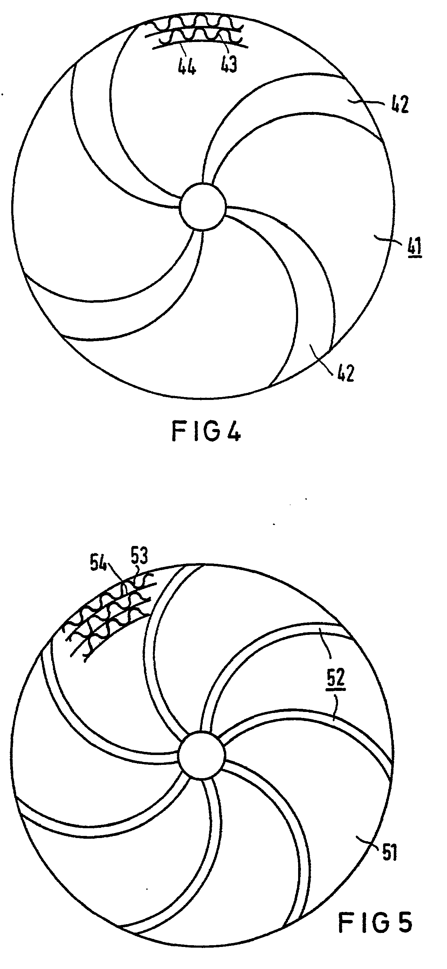

In den Figuren 4, 5 sind zu verlötende Bereiche 42 bzw. 52 dargestellt, welche die Form von etwa vom Mittelpunkt des Katalysatorträgerkörpers 41 bzw. 42 ausgehenden Spiralarmen haben. Je größer die Krümmung dieser Arme, desto besser die Dehnbarkeit in radialer Richtung. Die Breite der Arme und ihr Abstand können in weiten Grenzen gewählt werden, wobei jedoch sehr breite Arme die Elastizität verringern.

Die dargestellten Ausführungsbeispiele können in großem Maße variiert werden und sind natürlich auch für nicht kreisförmige Stirnflächen analog anwendbar. Auch die Kombination verschiedener Formen der Lötbereiche 12, 22, 32, 42, 52 ist möglich. Ferner kann es nötig sein, den zentralen Bereich und eventuell den äußersten Bereich eines Katalysatorträgerkörpers vollständig zu verlöten, so daß die erfindungsgemäßen Merkmale im strengen Sinne nur in den übrigen Bereichen verwirklicht werden müssen.

**Patentansprüche**

1. Katalysatorträgerkörper aus abwechselnd gewickelten Lagen glatter (14; 24; 34; 44; 54) und gewellter (13; 23; 33; 43; 53) Bleche mit Lötverbindungen zwischen den Blechen an einer oder beiden Stirnseiten, dadurch gekennzeichnet, daß die Lötverbindungen nicht alle Berührungsstellen zwischen den Blechen (13, 14; 23, 24; 33, 34; 43, 44; 53, 54) betreffen, sondern selektiv mehrere, gegebenenfalls zusammenhängende Bereiche (12; 22; 32; 42; 52) von einander benachbarten Berührungsstellen, wobei jeder verlötete Bereich (12; 22; 32; 42; 52) sowohl in Umfangsrichtung als auch in radialer Richtung nur einen Teil der Stirnfläche betrifft, so daß weder ein ganzer Radius noch ein ganzer Umfang einer Wicklungslage verlötet sind.

2. Katalysatorträgerkörper nach Anspruch 1, dadurch gekennzeichnet, daß jede Wicklungslage zumindest von einem, vorzugsweise von drei oder mehr verlöteten Bereichen (12; 22; 32; 42; 52) erfaßt ist, wobei jeder verlötete Bereich (12; 22; 32; 42; 52) mit seiner kleinsten Dimension größer als die größte Dimension einer Zelle des Katalysatorträgerkörpers ist.

3. Katalysatorträgerkörper nach Anspruch 1 oder 2, dadurch gekennzeichnet, daß die verlöteten Bereiche (12; 22; 32; 42; 52) ein regelmäßiges Muster bilden.

4. Katalysatorträgerkörper nach Anspruch 1, 2 oder 3, dadurch gekennzeichnet, daß die verlöteten Bereiche (42; 52) die Form von Spiralarmen haben.

5. Katalysatorträgerkörper nach Anspruch 4, dadurch gekennzeichnet, daß die verlöteten Bereiche (42; 52) sich nach außen verbreitern.

6. Katalysatorträgerkörper nach Anspruch 1 oder 2, dadurch gekennzeichnet, daß die verlöteten Bereiche (12; 22; 32) ein unregelmäßiges Muster bilden.

7. Katalysatorträgerkörper nach einem der vorhergehenden Ansprüche, dadurch gekennzeichnet, daß die verlöteten Bereiche (12; 22; 42; 52) jeweils in radialer Richtung ausgedehnter sind als in Umfangsrichtung.

8. Katalysatorträgerkörper nach einem der vorhergehenden Ansprüche, dadurch gekennzeichnet, daß die verlöteten Bereiche (12; 22; 32) in Umfangsrichtung und/oder in radialer Richtung gegeneinander versetzt angeordnet sind.

9. Katalysatorträgerkörper nach einem der vorhergehenden Ansprüche, dadurch gekennzeichnet, daß die verlöteten Bereiche (12; 22; 32; 42; 52) weniger als die Hälfte der Stirnfläche(n) umfassen, vorzugsweise 10 bis 30%.

10. Verfahren zum Beloten eines Katalysatorträgerkörpers gemäß einem der Ansprüche 1 bis 9, dadurch gekennzeichnet, daß die zu verlötenden Bereiche (12; 22; 32; 42; 52) zunächst mit einem Kleber, Binder oder vorzugsweise Haftkleber versehen und anschließend mit Lot beschichtet und gelötet werden, wobei der Kleber, Binder bzw. Haftkleber mit einem elastischen Stempel aufgebracht wird.

11. Verfahren zum Beloten eines Katalysatorträgerkörpers gemäß einem der Ansprüche 1 bis 9, dadurch gekennzeichnet, daß die zu verlötenden Bereiche (12; 22; 32; 42; 52) zunächst mit einem Kleber, Binder oder vorzugsweise Haftkleber versehen und anschließend mit Lot beschichtet und gelötet werden, wobei der Kleber, Binder bzw. Haftkleber und/oder das Lot durch eine Maske hindurch aufgebracht werden.

**Claims**

1. Catalyst carrier body consisting of alternating wound layers of smooth (14; 24; 34; 44; 54) and corrugated (13; 23; 33; 43; 53) sheets with brazing powder connections between the sheets at one or both end faces, characterized in that the brazing powder connections are not affected at all points of contact between the sheets (13, 14; 23, 24; 33, 34; 43, 44; 53, 54), but rather several selective, if desired continuous, areas (12; 22; 32; 42; 52) of points of contact which are adjacent to one another, each brazed area (12; 22; 32; 42; 52) only meeting one part of the end surface both in the circumferential direction and in the radial direction, so that neither an entire radius nor an entire circumference of a winding layer is brazed.

2. Catalyst carrier body according to claim 1, characterized in that each winding layer is comprised of at least one, preferably of three or more brazed areas (12; 22; 32; 42; 52), each brazed area (12; 22; 32; 42; 52) with its smallest size being larger than the largest size of a segment of the catalyst carrier body.

3. Catalyst carrier body according to claim 1 or 2, characterized in that the brazed areas (12; 22; 32; 42; 52) form a regular pattern.

4. Catalyst carrier body according to one of claims 1, 2 or 3, characterized in that the brazed areas (42; 52) have the form of spiral arms.

5. Catalyst carrier body according to claim 4, characterized in that the brazed areas (42; 52) widen outwards.

6. Catalyst carrier body according to claim 1 or 2, characterized in that the brazed areas (12; 22; 32) form an irregular pattern.

7. Catalyst carrier body according to one of the preceding claims, characterized in that the brazed areas (12; 22; 42; 52) in each case are more extensive in the radial direction than in the circumferential direction.

8. Catalyst carrier body according to one of the preceding claims, characterized in that the brazed areas (12; 22; 32) are staggered relative to each other in the circumferential direction and/or in the radial direction.

9. Catalyst carrier body according to one of the preceding claims, characterized in that the brazed areas (12; 22; 32; 42; 52) comprise less than half of the end surface(s), perferably 10 to 30%.

10. Process for providing a catalyst carrier body with brazing powder according to one of claims 1 to 9, characterized in that the areas (12; 22; 32; 42; 52) to be brazed, first of all are provided with an adhesive, binder or preferably contact adhesive and subsequently are coated and brazed with brazing powder, the adhesive, binder or contact adhesive being applied with a flexible stamp.

11. Process for providing a catalyst carrier body with brazing powder according to one of claims 1 to 9, characterized in that the areas (12; 22; 32; 42; 52) to be brazed, first of all provided with an adhesive, binder or preferably contact adhesive and subsequently are coated and brazed with brazing powder. the adhesive, binder or contact adhesive and/or the brazing powder being applied through a mask.

**Revendications**

1. Support de catalyseur, constitué de couches enroulées alternées de tôle lisse (14; 24; 34; 44; 54) et ondulée (13; 23; 33; 43; 53) avec des joints soudés entre les tôles sur l'un des côtés latéraux ou sur les deux côtés latéraux, caractérisé en ce que les joints soudés ne concernent pas tous les emplacements de contact entre les tôles (13, 14; 23, 24; 33, 34; 43, 44; 53, 54), mais sélectivement plusieurs régions (12; 22; 32; 42; 52), le cas échéant d'un seul tenant, d'emplacements de contact voisins, chaque région (12, 22; 32; 42; 52) soudée ne concernant à la fois dans la direction périphérique et dans la direction radiale qu'une partie de la surface frontale, de sorte que ni un rayon entier, ni un pourtour entier d'une couche d'enroulement n'est soudé.

2. Support de catalyseur suivant la revendication 1, caractérisé en ce que chaque couche d'enroulement est concernée au moins par une et de préférence par trois ou plusieurs régions soudées (12; 22; 32; 42; 52), la dimensions la plus petite de chaque région (12; 22; 32; 42; 52) étant supérieure à la dimension la plus grande d'une cellule du support de catalyseur.

3. Support de catalyseur suivant la revendication 1 ou 2, caractérisé en ce que les régions soudées (12; 22; 32; 42; 52) forment un modèle régulier.

4. Support de catalyseur suivant l'une des revendications 1, 2 ou 3, caractérisé en ce que les régions soudées (42 ; 52) ont la forme de bras de spirales.

5. Support de catalyseur suivant la revendication 4, caractérisé en ce que les régions soudées (42; 52) s'élargissent vers l'extérieur.

6. Support de catalyseur suivant la revendication 1 ou 2, caractérisé en ce que les régions soudées (12; 22; 32) forment un modèle irrégulier.

7. Support de catalyseur suivant l'une des revendications précédentes, caractérisé en ce que les régions soudées (12; 22; 42; 52) sont plus étendues dans la direction périphérique.

8. Support de catalyseur suivant l'une des revendications précédentes, caractérisé en ce que les régions soudées (12; 22; 32) sont disposées de manière décalées les unes par rapport aux autres dans la direction périphérique et/ou dans la direction radiale.

9. Support de catalyseur suivant l'une des revendications précédentes, caractérisé en ce que les régions soudées (12; 22; 32; 42; 52) représentent moins de la moitié de la surface frontale ou des surfaces frontales et de préférence en représentent de 10 à 30%.

10. Procédé de soudage d'un support de catalyseur suivant l'une des revendications 1 à 9, caractérisé en ce qu'il consiste à munir d'abord les régions à souder (12; 22; 32; 42; 52) d'un agent adhésif, d'un liant ou, de préférence, d'un agent d'accrochage et ensuite à les revêtir de soudure et à les souder, l'adhésif, le liant ou l'agent d'accrochage étant déposés avec un poinçon élastique.

11. Procédé de soudage d'un support de catalyseur suivant l'une des revendications 1 à 9, caractérisé en ce qu'il consiste à munir d'abord les régions à souder (12; 22; 32; 42; 52) d'un agent adhésif, d'un liant ou, de préférence, d'un agent d'accrochage et ensuite à les revêtir de soudure et à les souder, l'agent adhésif, le liant ou l'agent d'accrochage et/ou la soudure étant déposés à travers un masque.

FIG 1

FIG 2

FIG 3

FIG 4

FIG 5